# EUROPÄISCHE PATENTSCHRIFT

(11) **EP 0 406 675 B1**
(45) Veröffentlichungstag und Bekanntmachung des Hinweises auf die Patenterteilung: **13.04.1994**
(21) Anmeldenummer: 90112184.8
(22) Anmeldetag: 27.06.1990
(51) Int. Cl.: B01D 53/34, B01D 53/14

(54) **Verfahren zur selektiven Absorption von Chlor aus CO2-haltigen Abgasen**
Process for selective absorption of chlorine from waste gases containing CO2
Procédé pour l'absorption sélective du chlore d'effluents gazeux contenant du CO2

(30) Priorität: 01.07.1989 DE 3921714
(43) Veröffentlichungstag der Anmeldung: 09.01.1991
(73) Patentinhaber: HOECHST AKTIENGESELLSCHAFT, 65926 Frankfurt am Main (DE)
(72) Erfinder: Girrbach, Ulrich, Dr., D-6000 Frankfurt am Main (DE); Grimm, Richard, Dr., D-6200 Königstein/Taunus (DE); Härtl, Edgar, Dr., D-6070 Langen (DE); Malow, Egon, D-6203 Hochheim (DE)

(56) Entgegenhaltungen:
- EP-A- 0 237 464
- US-A- 3 984 523
- CHEMICAL ABSTRACTS, Band 83, Nr. 24, 1975, Seite 271, Zusammenfassung Nr.197515q, Columbus, Ohio, US
- CHEMICAL ABSTRACTS, Band 81, Nr. 26, 1974, Seite 393, Zusammenfassung Nr.175591t, Columbus, Ohio, US

## Beschreibung

Bei der Verbrennung nach dem DEACON-Gleichgewicht chlorierter Kohlenwasserstoffe entsteht neben Chlorwasserstoff und CO₂ auch elementares Chlor. Dieses Chlor darf nicht an die Umgebung abgegeben werden und muß daher weitestgehend aus dem Abgas entfernt werden. In der Bundesrepublik Deutschland muß die Chlorkonzentration unterhalb 5 mg/m³ liegen.

Die Absorption von Chlor aus Gasströmen erfolgt bisher im allgemeinen mit Natronlauge unter Bildung von Natriumhypochlorit:

Cl₂ + 2NaOH→NaCl + NaOCl + H₂O

Bei Gasströmen, die neben Chlor nur Inertgase enthalten, entsteht aus dem Absorptionsmittel ein technisch verwertbares Produkt (NaOCl-Lösung). Enthält das zu absorbierende Abgas jedoch neben Cl₂ noch andere alkalilösliche Gase, so fällt bei gleicher Vorgehensweise eine Lösung aus mehreren Salzen an, die weitgehend unverwertbar ist. Beispielsweise wird auch CO₂ unter Bildung von NaHCO₃ von Natronlauge absorbiert:

NaOH + CO₂→NaHCO₃

Die Beseitigung von NaOCl in solchen Salzgemischen erfolgt nach dem Stand der Technik durch Zugabe von Na₂SO₃.

Zur Minimierung der unerwünschten gleichzeitigen Absorption von CO₂ wurden bereits viele Anstrengungen unternommen, so daß für spezielle Anwendungen bereits Techniken bekannt sind.

Ein in der DE-A-2 849 498 beschriebenes Verfahren nutzt zwei mit NaOH betriebene Absorptionskreisläufe zur Absorption von Cl₂ zu NaCl und NaOCl. Ein Teil des entstandenen NaOCl wird dauernd ausgeschleust und mit NaHSO₃ zersetzt. Das nach diesem Verfahren gereinigte Abgas enthält jedoch noch ca. 10 ppm, d.h. etwa 30 mg/m³ Chlor.

Die in der US-A-3 984 523 beschriebene mehrstufige Gegenstromabsorption von Chlor mit Natronlauge eignet sich nur für Gasströme, die erstens hoch mit Chlor beladen sind und zweitens CO₂ in einer ähnlichen Konzentration wie Cl₂ enthalten. Für 100-1000fachen Überschuß an CO₂ gegenüber Cl₂ im Abgas ist dieses Verfahren wegen der starken Absorption von CO₂ in Alkali jedoch nicht geeignet. Bei hohen Chlorbeladungen im Abgas wird das in der letzten Stufe absorbierte CO₂ in der ersten Stufe vom Chlor wieder ausgetrieben, was bei niedrigen Chlorbeladungen nicht möglich ist. Die US-A-3 984 523 lehrt weiterhin, daß es nicht möglich sei, durch Waschen mit NaHCO₃-Lösung einen niedrigeren Chlorgehalt als 5 mg/m³ Cl₂ im Abgas einzustellen.

Überraschenderweise wurde nun gefunden, daß mit einer NaHCO₃-Lösung, der geringe Mengen an NaHSO₃ zugesetzt werden, eine weitestgehende Cl₂-Entfernung auch bei vielfacher Wiederverwendung der gebrauchten Waschlösung möglich ist, ohne daß CO₂ absorbiert wird. Die erreichten Werte an Cl₂ im gereinigten Gas lagen unterhalb der analytischen Nachweisgrenze.

Gegenstand der Erfindung ist ein Verfahren zur selektiven Absorption von Chlor aus CO₂-haltigem Abgas, dadurch gekennzeichnet, daß man das Abgas mit einer wäßrigen Lösung wäscht, die 0,1-10 Gew.-% NaHCO₃ und 0,01-5 Gew.-% NaHSO₃ enthält. Vorzugsweise enthält die wäßrige Lösung, mit der das Abgas gewaschen wird 0,5-7 Gew.-% NaHCO₃ und 0,05-1 Gew.-% NaHSO₃, insbesondere 1-5 Gew.-% NaHCO₃ und 0,1-0,5 Gew.-% NaHSO₃.

Statt NaHCO₃ kann man der Waschlösung auch NaOH zugeben, da dieses sofort mit dem CO₂ des Abgases zu NaHCO₃ reagiert. Falls das Abgas SO₂ enthält, kann man analog anstelle von NaHSO₃ der Waschlösung NaOH zugeben, da dieses mit dem SO₂ zu NaHSO₃ reagiert.

Das erfindungsgemäße Verfahren erlaubt es, hohe Salz-Konzentrationen in der umgepumpten Waschlösung zu halten. Dadurch muß nur sehr wenig verbrauchte Waschlösung durch neue Waschlösung ersetzt werden.

Die Absorption von Chlor aus CO₂-haltigen Abgasen (Rauchgasen) erfolgt kontinuierlich in einer ein- oder mehrstufigen Absorptionsanlage (Kolonne, Strahlwäscher, etc.).

Das erfindungsgemäße Verfahren kann so betrieben werden, daß dauernd soviel frische Absorptionslösung zugegeben wird, daß der pH-Wert ungefähr konstant bleibt.

Das erfindungsgemäße Verfahren eignet sich insbesondere für CO₂-reiche Gase, sogar für solche deren CO₂-Gehalt 10⁴ bis 10⁶ mal so hoch ist wie der Cl₂-Gehalt.

Die folgenden Beispiele sollen die Erfindung erläutern.

### Beispiel 1

In einem Strahlwäscher wurden 1,8 m³/h eines Abgases gereinigt, welches 70 mg/m³ Cl₂, 20 Vol.-% CO₂ und 4 % O₂ enthielt, der Rest war N₂.

Die Waschlösung enthielt im stationären Zustand neben Wasser;

| | |
|---|---|
| 1. NaHCO₃ | 4 Gew.-% |
| 2. NaHSO₃ | 0,4 Gew.-% |
| 3. Na₂SO₄ | 0,3 Gew.-% |
| 4. NaCl | 0,2 Gew.-% |

Pro Stunde wurden 100 ml Waschlösung abgezogen und durch frische Waschlösung ersetzt. Die frische Waschlösung enthielt neben Wasser:

| | |
|---|---|
| 1. NaHCO₃ | 4,3 Gew.-% |
| 2. NaHSO₃ | 0,6 Gew.-% |

Der Hold up des Strahlwäschers war ca. 8 l, die umgepumpte Menge an Waschlösung betrug ca. 35 l/h. Dies entspricht einem Verhältnis Gas : Flüssigkeit von ca. 50 : 1. Die Konzentration an Chlor im gereinigten Abgas am Ausgang des Wäschers lag bei weniger als 0,1 mg Cl₂/m³ Gas. Die Bestimmung der Chlorkonzentration erfolgte nach dem Methylorange-Verfahren (VDI-Handbuch "Reinhaltung der Luft", Band 5, Register 9, Richtlinie VDI 3488, Blatt 1).

### Beispiel 2

In einem Strahlwäscher wurden 1,8 m³/h eines Abgases gereinigt, welches außer N₂ noch 130 mg/m³ an Chlor, 20 Vol.-% CO₂ und 4 % O₂ enthielt. Die Waschlösung enthielt im stationären Zustand neben Wasser:

| | |
|---|---|
| 1. NaHCO₃ | 4 Gew.-% |
| 2. NaHSO₃ | 0,4 Gew.-% |
| 3. Na₂SO₄ | 0,5 Gew.-% |
| 4. NaCl | 0,4 Gew.-% |

Pro Stunde wurden 100 ml Waschlösung abgezogen und durch frische Waschlösung ersetzt. Die frische Waschlösung enthielt neben Wasser:

| | |
|---|---|
| 1. NaHCO₃ | 5 Gew.-% |
| 2. NaHSO₃ | 0,8 Gew.-% |

Ansonsten wurde wie in Beispiel 1 gearbeitet.

Die Konzentration an Chlor im gereinigten Abgas am Ausgang des Wäschers lag bei weniger als 0,1 mg Cl₂/m³ Gas.

## Patentansprüche

1. Verfahren zur selektiven Absorption von Chlor aus CO₂-haltigem Abgas, dadurch gekennzeichnet, daß man das Abgas mit einer wäßrigen Lösung wäscht, die 0,1-10 Gew.-% NaHCO₃ und 0,01-5 Gew.-% NaHSO₃ enthält.

2. Verfahren nach Anspruch 1, dadurch gekennzeichnet, daß man das Abgas mit einer wäßrigen Lösung wäscht, die 0,5-7 Gew.-% NaHCO₃ und 0,05-1 Gew.-% NaHSO₃ enthält.

3. Verfahren nach Anspruch 1, dadurch gekennzeichnet, daß man das Abgas mit einer wäßrigen Lösung wäscht, die 1-5 Gew.-% NaHCO₃ und 0,1-0,5 Gew.-% NaHSO₃ enthält.

## Claims

1. A process for the selective absorption of chlorine from CO₂-containing off-gas, which comprises washing the off-gas with an aqueous solution which contains 0.1-10% by weight of NaHCO₃ and 0.01-5% by weight of NaHSO₃.

2. The process as claimed in claim 1, wherein the off-gas is washed with an aqueous solution which contains 0.5-7% by weight of NaHCO₃ and 0.05-1% by weight of NaHSO₃.

3. The process as claimed in claim 1, wherein the off-gas is washed with an aqueous solution which contains 1-5% by weight of NaHCO₃ and 0.1-0.5% by weight of NaHSO₃.

## Revendications

1. Procédé d'absorption sélective de chlore à partir d'effluents gazeux contenant du CO₂, caractérisé en ce que l'on lave les effluents gazeux avec une solution aqueuse qui contient 0,1 à 10 % en masse de NaHCO₃ et 0,01 à 5 % en masse de NaHSO₃.

2. Procédé selon la revendication 1, caractérisé en ce que l'on lave les effluents gazeux avec une solution aqueuse qui contient 0,5 à 7 % en masse de NaHCO₃ et 0,05 à 1 % en masse de NaHSO₃.

3. Procédé selon la revendication, caractérisé en ce que l'on lave les effluents gazeux avec une solution aqueuse qui contient 1 à 5 % en masse de NaHCO₃ et 0,1 à 0,5 % en masse de NaHSO₃.
